Europäisches Patentamt

European Patent Office

Office européen des brevets

(11) Publication number: **0 466 039 A2**

# EUROPEAN PATENT APPLICATION

(21) Application number: 91111153.2

(22) Date of filing: 04.07.91

(51) Int. Cl.5: **G06K 9/46, A61B 5/117**

(30) Priority: **05.07.90 JP 177791/90**

(43) Date of publication of application:
**15.01.92 Bulletin 92/03**

(84) Designated Contracting States:
**BE DE FR GB IT NL SE**

(71) Applicant: **EZEL INC.**
**2-22-2 Koishikawa**
**Bunkyo-ku Tokyo 112(JP)**

Applicant: **SHARP CORPORATION**

**22-22, Nagaike-cho Abeno-ku**
**Osaka 545(JP)**

(72) Inventor: **Kumagai,Ryohei**
**c/o Ezel Inc.**
**2-22-2,Koishikawa,Bunkyo-ku Tokyo 112(JP)**

(74) Representative: **Patentanwälte Grünecker,**
**Kinkeldey, Stockmair & Partner**
**Maximilianstrasse 58**
**W-8000 München 22(DE)**

(54) Image comparison method.

(57) A method for comparing two images including ridges with each other, comprising steps from i) to iv).
i) Calculating density value of each pixel of an image to be examined and reference image; ii) detecting a direction with minimal change between each pixel and adjacent one, concerning to each pixel; iii) dividing the image to be examined and reference image, calculating an index according to the direction with minimal change as to each block; iv) using the index, it is judged if the image to be examined and reference image substantially coincide to each other.

Fig. 1

## FIELD OF THE INVENTION

The present invention relates to the method for comparing images including ridges, applied to fingerprint verification system, for example.

## BACKGROUND OF THE INVENTION

The process of conventional verification method is as follows.

i) An image including fingerprint ridges is binarized;

ii) A ridge pattern by thinning the binarized image is obtained;

iii) Branches, edge points and curvature from the ridge pattern are extracted as main characteristics;

iv) Sample image (fingerprint image to be examined) is compared with master image (reference fingerprint image).

## SUMMARY OF THE INVENTION

In conventional method above, verification precision remarkably changes by the quality of ridge pattern as the base for extracting characteristics. Therefore, complete fingerprint have to be always printed by putting a finger on the predetermined place accurately when a sample image is inputted to fingerprint verification system. There have been a lot of restriction for inputting a sample image.

The present invention is invented so as to solve the above problem and has an object to provide a comparison method for images including ridges, which can ease much restriction for input of a sample image.

An image comparison method according to the present invention is characterized in the following steps.

i) Calculating a density value of each pixel in an image to be examined and reference image;

ii) Detecting a direction with minimal change of density value between pixels adjacent each other concerning to each pixel;

iii) Dividing an image to be examined and reference image into plural blocks;

iv) Calculating the index according to the direction with minimal change in the above concerning to each block;

v) Judging if the image to be examined coincides to the reference image.

The second comparison method according to the present invention performs as follows.

i) Calculating the density value of each pixel in an images to be examined and reference image;

ii) Detecting the direction with minimal change of density value between adjacent pixels concerning to each pixel;

iii) Calculating the ratio of the direction with minimal change in the above concerning to the image to be examined and reference image;

iv) Judging if the image to be examined substantially coincides to the reference image using the ratio calculated iii).

As for an image comparison method relates to the present invention, comparison judgment in wide view is performed, with maximal use of information in an image by processing input image of gray-level as it is, and by processing the image in every block.

## BRIEF DESCRIPTION OF THE DRAWINGS

Fig. 1 shows the block diagram to fingerprint verification system using the image comparison method of the present invention.

Fig. 2 shows the diagram of the part touched a finger on the slope of right prism with enlargement.

Fig. 3 shows an example of ridges of a fingerprint.

Fig. 4 (I) shows a histogram concerning to the density change of pixels in area "I" in Fig. 3.

Fig. 4 (II) shows a histogram concerning to the density change of pixels in area "II" in Fig. 3.

Fig. 5 is a diagram to show the direction of partial differential.

Fig. 6 is a diagram to explain the method to divide fingerprint image into blocks.

Fig. 7 shows a histogram of pixels coincide to direction codes.

Fig. 8 is a diagram to show the definition of direction codes.

From A to O...blocks.

## DETAILED DESCRIPTION OF THE PREFERRED EMBODIMENTS

Hereinafter, an image comparison method relates to the present invention is described with referring to the attached drawn embodiments.

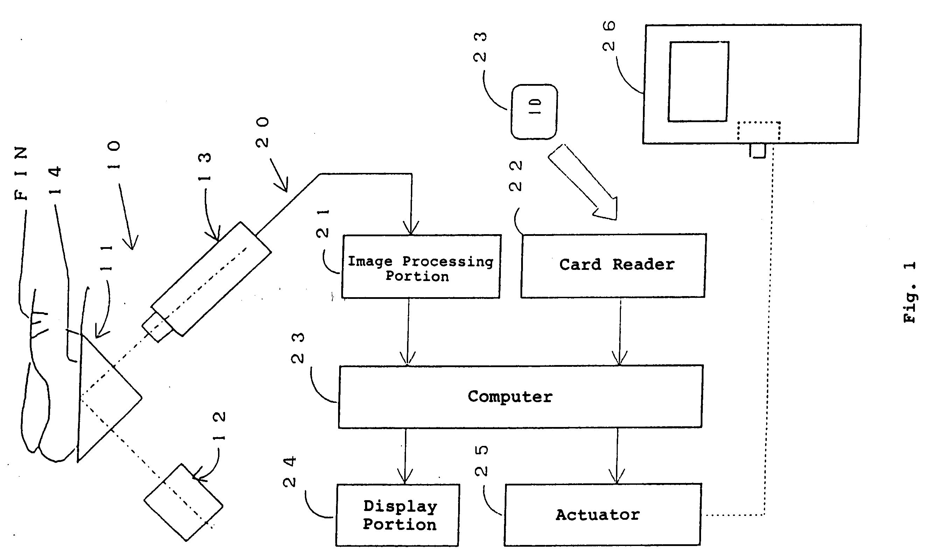

Fig. 1 shows a fingerprint verification system using image comparison method of the present invention. The fingerprint verification system comprises image input system 10 and comparison system 20: the image photographed in image input system 10 is compared in comparison system 20. Image inputting system 10 makes incidence with light on right angled prism 11 from light source 12, and detect its all reflected light by CCD camera 13. Slope 14 of prism 12 is the detecting surface. FIN of a finger to be detected fingerprint is touched to slope 14. When a finger FIN is not touched, light is all reflected and white image is detected by CCD camera 13.

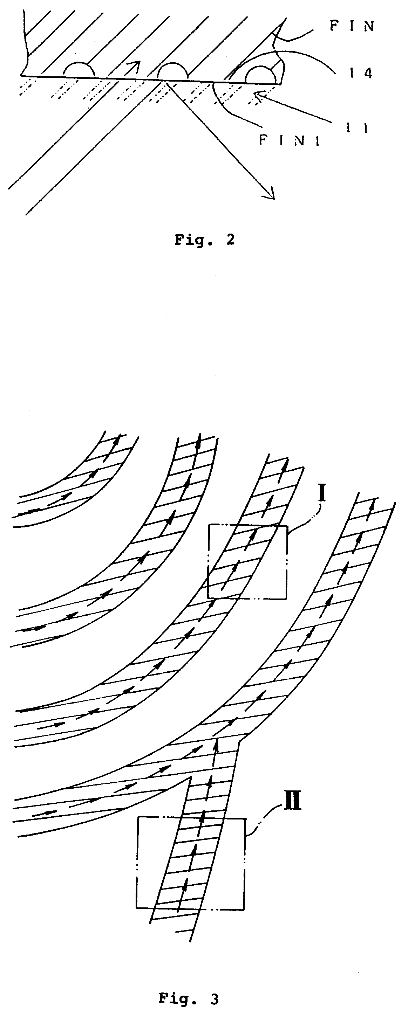

As Fig. 2, since the refractive index of the surface of the prism is changed on the surface touched a finger FIN 1 (the ridges of a fingerprint), the light go through the surface without refraction. Therefore, the ridges of the fingerprint is inputted to the CCD camera as dark lines.

Comparison system 20 comprises image processing portion 21 and card reader 22. Inserting ID card 23 into card reader 22 by the one to be examined, master data is read out and the data inputted from image inputting system 10 is compared with the master data. The comparison is executed in computer 23. The comparison result is indicated on display portion 24 and simultaneously, the lock of door 26 is released and is opened by the working of actuator 25 when it is found that the two fingerprints coincide to each other by the comparison.

For the specification of master data, various ways can be adopted, such as input of ID number from keyboard by the one to be examined.

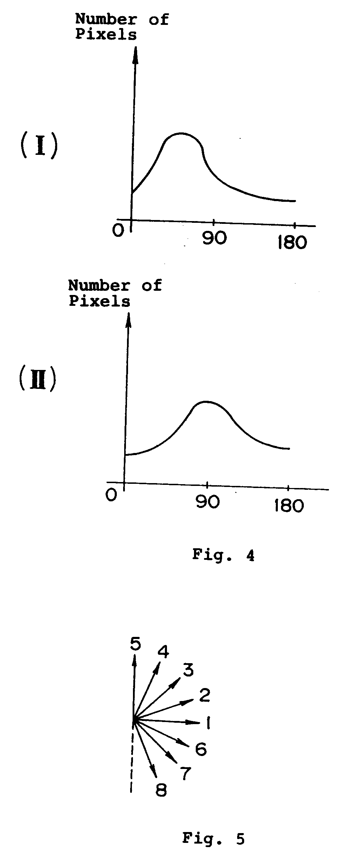

Fig. 3 shows general directions of ridges of a fingerprint by arrows. Inventors adopted the histogram in the direction with minimal partial differential of density value on each pixel as the index to show the general direction. For example, as density value change of each pixel included area I inclines to be minimum in the direction rotated $45°$ counterclockwise from horizontal direction, the partial differential value of the density of each pixel in the area has high frequency to be minimum in the direction of $45°$. Therefore, the histogram in Fig. 4 (I) can be obtained concerning to the change of density value of pixels in area I. On the other hand, as the change of density value of each pixels included in area II inclines to be minimum in the direction rotated $90°$ counterclockwise from horizontal direction, the partial differential value of the density of each pixel in the area has high frequency to be minimum in the direction of $90°$. The histogram in Fig. 4 (II) can be obtained concerning to the change of density value of pixels in area II.

The following processings are executed to obtain such histograms.

First, density value is calculated for each pixels in sample image of inputted fingerprint image. The density value is calculated for each pixel and memorized in the memory of computer 23 for master image of fingerprint image to be the reference for comparing with the sample image.

Next, partial differential value of a density between adjacent pixels is calculated for each pixel. Here, an adjacent pixel designates not only the pixel just next the one to be performed partial differential but also the one with the distance of a few pixels from it. Partial difference is performed with the range of $157.5°$ as shown in Fig. 5, concerning to the horizontal direction (number 1), the directions rotated $22.5°$ counterclockwise in sequence from the horizontal direction (numbers 2, 3, 4 and 5) and the directions rotated $22.5°$ clockwise in sequence from the horizontal direction (numbers 6, 7 and 8). Settling x-coordinate in horizontal direction and y-coordinate in perpendicular direction, and assuming the change quantity of density to be $\Delta d$, "z" performed partial differential is calculated as below.

$$z = \frac{\Delta d}{\Delta x + \Delta y}$$

Partial differential in digital image is scattering: especially concerning to the distance element, some necessities to adopt rather large distance occurs according to the direction of partial difference. However when the distance becomes too large, differential is performed between a ridge and another ridge beyond a trough and the fingerprint ridge characteristics is lost. Therefore as the distance value, small value is to be, adopted while the direction precision is enhanced as much as possible. Image input system 10 in Fig. 1 needs amendment for elements in Y direction in the image to be inputted to CCD camera 13 in order to observe the fingerprint from the slant direction of $45°$. Good results are obtained by using distances of $0°$ ($\Delta x = 2$, $\Delta y = 0$), $22.5°$ ($\Delta x = 2$, $\Delta y = 1$), $45°$ ($\Delta x = 2$, $\Delta y = 2$) and $67.5°$ ($\Delta x = 2$, $\Delta y = 3$) as the distances of partial differential considering the amendment.

When calculating the value through partial differential in the directions from the number 1 to 8 in Fig. 5 of each pixel, the smaller one is inputted to memory, comparing the partial differential value already calculated and newly calculated. Therefore, the minimal partial differential value is stored in the memory when the calculations in 8 directions are completed by inputting the smaller one to memory while performing partial differential in each direction. The minimal differential value in all the pixels is calculated by performing the processing for all the pixels.

Next, calculating partial difference in each direction from number 1 to 8 of each pixel, the partial differential values are compared with the minimal one already calculated. When the partial differential value calculated new coincides to the minimal one, the number corresponding to the "direction" of partial differential value then (the numbers from 1 to 8 in Fig. 5) is stored in the memory in image processing portion. Consequently, the direction with the minimal partial differential value is calculated in all the pixels, and the distribution of directions with the minimal partial differential value is obtained in whole image. In this way, the information of original image can be used in maxim as direction elements in every part of image are extracted directly from a gray-level image.

When the distribution of directions with the minimal partial difference value is obtained in a sample image, it is possible to grasp the tendency of fingerprint ridges. Fingerprint verification can be performed by comparing the distribution with master image. That is, putting direction data of minimal partial differential obtained in every pixel between sample image and master image, the data is compared with every corresponding image. In the present embodiment, dividing an image into plural blocks and calculating an index according to the direction of the minimal value, the sample image is compared with the master image using the index. The way is adopted to compare sample image and master image in wide view.

The fingerprint comparison can be executed in every image, not by dividing it into blocks. That is, sample image can be judged to be coincided to master image each other when pixels equal to or more than 80% coincide to in the direction above.

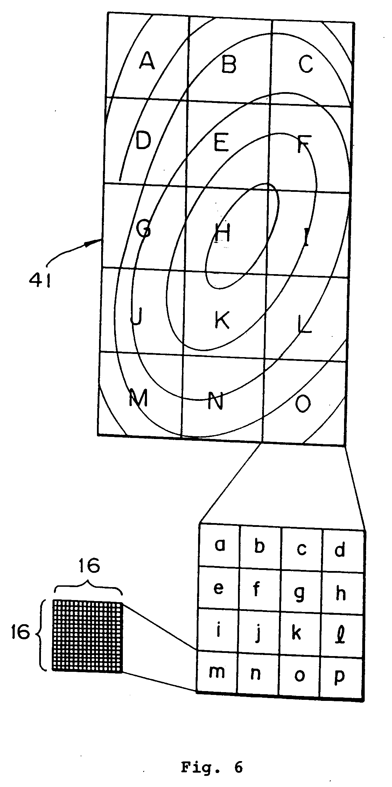

Fig. 6 shows the way to divide fingerprint 41 into blocks. Image 41 is divided into 15 blocks of A to O, which are divided into 16 subblocks of "a" to "p" comprised of 16x16 pixels. In the present embodiment, calculating characteristics value according to the formula below, sample image is compared with master image.

A total variance is calculated in each subblock of "a" to "p". It is defined by the following formula.

Total Variance
= (Variance between Classes) + (Variance within Classes)
= $\sin^2(\theta/2)$ + (Vm + Vs)/2

In the formula above, $\theta$ is the angle of direction lags to be the minimal values of partial differential of master image and sample image in each subblock: Vm is the variance within classes in each subblock of master image: Vs is the variance between classes in each subblock of sample image. In the present embodiment, total variance RE is defined as what is subtracted the total variance defined by the formula above from 1. That is, total variance RE is defined by the formula below.

$$RE = 1 - \sin^2(\theta/2) - (Vm+Vs)/2$$

$$= \cos^2(\theta/2) - (Vm+Vs)/2 \qquad \ldots\ldots(1)$$

The total variance inclines to increase as higher coincidence.

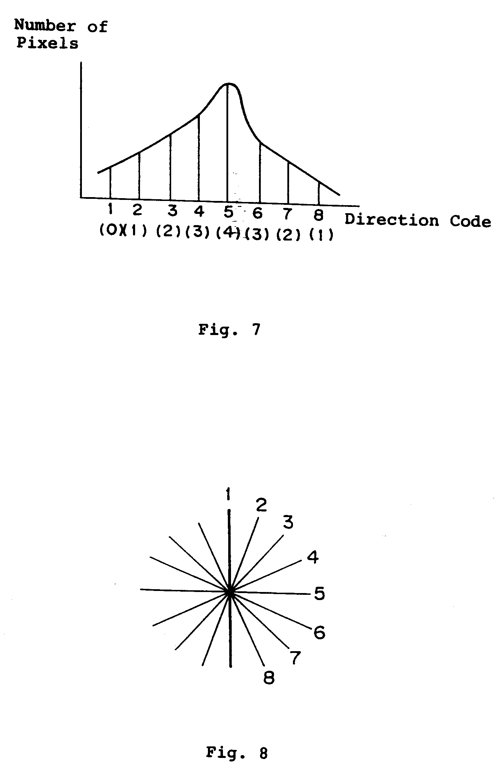

Variances within classes Vm and Vs in master image and sample image are calculated in order to calculate the total variance defined by formula (1). It is described seeing Fig. 7 and Fig. 8. Fig. 7 shows the histogram of the number of pixels on direction codes and Fig. 8 shows the definition of direction codes: defining the direction code in perpendicular upper direction to be "1", it increases up to "8" as the direction rotates 22.5° clockwise from "1".

Deciding the direction code "1" to be provisional center point, direction lag is calculated in comparison with direction code "1". The direction lags are 1, 2, 3, 4, 3, 2 and 1 on direction codes "2", "3", "4", "5", "6", "7" and "8", respectively (shown in parentheses in Fig. 7). As there is no consideration of direction lag of clockwise or counterclockwise, direction lags are the same in direction codes "2" and "8", "3" and "7" and "4" and "6".

4

Multiplying the weight to the number of pixels in each direction code corresponding to the direction lag, the sum total T is calculated. Here, assuming the angle of direction lag to be $\theta$, the weight is $\sin^2\theta$ : the weight is 0.0 in the case of no direction lag, it is 0.15 in the case of 1 of direction lag, it is 0.5 in the case of 2 of direction lag, it is 0.85 in the case of 3 of direction lag, it is 1.0 in the case of 4 of direction lay. The reason why weight is multiplied to the number of pixels in each direction code is that pixel influence on a variance within classes is supposed to become strong as further distant from provisional center point.

A variance within classes is calculated by dividing total sum T obtained in this way by 256 of the number of pixels in the subblocks. The variance within classes is calculated assuming all direction codes to be provisional center points: that is, 8 of variances within classes are obtained for each subblock. Next, finding the minimal value in these variances within classes, it is provided to be the variance within classes in the subblock. And, the direction code corresponding to the minimal variance within classes is the one in the subblocks. Consequently, variances within classes and direction codes can be obtained in each subblock from "a" to "p".

Next, calculating the mean value of the variance within classes in subblocks from "a" to "p", it is provided to be the variance within classes in corresponding blocks from A to O. The variance within classes obtained in this way is Vm and Vs in the master image and sample image to be used in formula (1) above. In the same way, calculating the mean value of direction codes in subblocks from "a" to "p", provide it to be the direction code of corresponding blocks from A to O. The direction code is the one to be used in formula (1) above.

$\cos^2(\theta/2)$ in formula (1) above of direction lag is calculated next. It is calculated through the process of: calculating the difference of direction codes between master image and sample image in every block, providing the angle corresponding to the difference to be $\theta$. For example, when the difference between direction codes of master and sample image is 1, direction lag is 0.96 for $\theta$ is 22.5°. In the same way, when the difference is 2, direction lay is 0.85 for $\theta$ is 45° : when the difference is 3, direction lag is 0.69 for $\theta$ is 67.5° : when the difference is 4, direction lag is 0.5 for $\theta$ is 90°.

Using direction lays (a variance between classes) and a variance within classes Vm and Vs obtained as above, total variance RE can be calculated in every block A to O through formula (1). Total variance RE changes from 0 to 1: as sample image resembles to master image, it is close to 1. For example, when sample image almost coincides to master image, total variance RE is equal to or more than 0.8 in all blocks from A to O. On the other hand, when sample image does not coincide to master image, total variance RE is less then 0.7 in most blocks from A to O. When sample image almost coincides to but partially does not to master image, total variance RE is equal to or more than 0.8 in almost all the blocks but it is less than 0.7 in a part of the blocks.

Correlation is calculated next. It is defined as the following formula.

$$COR = \frac{\sum_{i=1}^{8} x(\theta_i) \times X(\theta_i)}{\sqrt{\sum_{i=1}^{8} x^2(\theta_i) \times \sum_{i=1}^{8} X^2(\theta_i)}} \quad \cdots\cdots (2)$$

Where, COR is correlation, $x(\theta i)$ is number of pixels in $\theta i$(deg) direction in master image.

In the correlation, calculating it in every subblock from "a" to "p", its mean value is the correlation of corresponding block in the same way as the case of a total variance. The correlation changes from 0 to 1: as a sample image resemble to the master image, it becomes close to 1.

Distance between classes is calculated in every block from A to O. The distance between classes is defined by the following formula.

$$DG = \frac{\sum_{i=1}^{8} \{x(\theta_i) - X(\theta_i)\}^2}{\sum_{i=1}^{8} x(\theta_i) \times \sum_{i=1}^{8} X} \quad \cdots\cdots (3)$$

5

Where, DG is distance between classes, x( $\theta$ i) is the number of pixels in sample image in the direction of $\theta$ i(deg).

Distance between classes is calculated in each subblock from "a" to "p", and their mean value is the distance between classes corresponding block, as in the same way of a total variance and correlation. Distance between classes changes from 0 to 1: as a sample image resembles to the master image, it becomes close to 0.

As above, a total variance, correlation and distance between classes are calculated in every block from A to O as to master image and sample image. For a judgment of substantial coincidence between master image and sample image, it is necessary a total variance to be equal to or more than 0.7, correlation to be equal to or more than 0.96 and distance between classes to be equal to or less than 0.1. In other words, when even one block is out of these limits, the sample image is judged to be different from the master image. When such comparison method is adopted in fingerprint verification system as in Fig. 1, the lock of door 26 is released on the judgment of coincidence between a fingerprint to be examined (sample image) and a reference fingerprint (master image). When a fingerprint to be examined is not judged to be coincide, the person to be examined is required to input again his fingerprint, or the message to reject going in is displayed without releasing the lock.

A fingerprint is not always within the range of all the block from A to O: for example on a corner block, there is a possibility for pixel data in a subblock from "a" to "p" is less then 256 (16x16 pixels). In such a case, the total variance, correlation and distance between classes are to be calculated ignoring the pixel data in the subblock. When the ratio of invalid blocks is more than a predetermined value, the person to be examined is immediately required to input again his fingerprint. It is not necessary to use all the indexes of total variances, correlation and distance between classes: only one or two of them may be used for a comparison of images.

As mentioned above, the present invention compares master image and sample image by i) calculating the direction with the minimal change of density value, ii) calculating the index according to the direction of each block in each image. Therefore, each image can be compared in wide view and it is always possible to execute precise comparison on any quality of ridge pattern. That is, in the present invention, the limitations for inputting sample image are eased.

## Claims

1. A method for comparing two images including ridges with each other, comprising steps from i) to iv) below.

    i) Calculating density value of each pixel of an image to be examined and reference image;

    ii) Detecting a direction with minimal density change between each pixel and adjacent one, concerning to each pixel;

    iii) Dividing said image to be examined and reference image, calculating an index according to said direction with minimal change as to each block;

    iv) Using said index, it is judged if said image to be examined and reference image substantially coincide to each other.

2. A method for comparing two images including ridges with each other, comprising steps from i) to iv) below.

    i) Calculating density value of each pixel of an image to be examined and reference image;

    ii) Detecting a direction with minimal change between each pixel and adjacent one, concerning to each pixel;

    iii) Calculating a ratio of said direction with minimal change as to said image to be examined and reference image;

    iv) Using said ratio, it is judged if said image to be examined and reference image substantially coincide to each other.

3. A method for comparing two images claimed in Claim 1, wherein said direction with minimal density change is obtained according to a partial differential.

4. A method for comparing two images claimed in Claim 3, wherein said partial differential is stored in a memory and substituted by smaller partial differential so that the minimal value of said partial differential is obtained.

5. A method for comparing two images claimed in Claim 4, wherein direction codes of 1 to 8 are stored in said memory representing said direction.

6. A method for comparing two images claimed in Claim 1, wherein:
   i) An image is divided into a plurality of blocks each of which is divided into a plurality of subblocks;
   ii) The mean value of index of subblocks is defined as a direction of a block.

7. A method for comparing two images claimed in Claim 1, wherein a complement of a total variance is defined as said total variance.

8. A method for comparing two images claimed in Claim 7, wherein said complement defined as said total variance is calculated by

$$1-\sin^2(\theta/2)-(Vm+Vs)/2$$

$$=\cos^2(\theta/2)-(Vm+Vs)/2$$

9. A method for comparing two images claimed in Claim 1, wherein an index is defined as correlation.

10. A method for comparing two images claimed in Claim 9, wherein said index defined as correlation is calculated by

$$\frac{\sum_{i=1}^{8} x(\theta_i) \times x(\theta_i)}{\sqrt{\sum_{i=1}^{8} x^2(\theta_i) \times \sum_{i=1}^{8} x^2(\theta_i)}}$$

11. A method for comparing two images claimed in Claim 1, wherein an index is defined as a distance between classes.

12. A method for comparing two images claimed in Claim 11, wherein said index defined as a distance between classes is calculated by

$$\frac{\sum_{i=1}^{8} \{x(\theta_i)-X(\theta_i)\}^2}{\sum_{i=1}^{8} x(\theta_i) \times \sum_{i=1}^{8} X(\theta_i)}$$

13. A method for comparing two images claimed in Claim 6, wherein a subblock including pixels of a number less than a predetermined value is ignored in said calculation of said index.

14. A method for comparing two images claimed in Claim 6, wherein fingerprint input is required again when number of subblocks including pixels of a number less than a predetermined value reaches a predetermined value.

Fig. 1

Fig. 2

Fig. 3

(I)

Number of
Pixels

0          90          180

(II)

Number of
Pixels

0          90          180

Fig. 4

Fig. 5

Fig. 6

Number of
Pixels

1   2   3   4   5   6   7   8   Direction Code
(OX1) (2)(3) (4)(3) (2) (1)

Fig. 7

Fig. 8